# FASCICULE DE BREVET EUROPEEN

(11) **EP 2 532 617 B1**
(45) Date de publication et mention de la délivrance du brevet: **01.07.2015**
(21) Numéro de dépôt: 12169422.8
(22) Date de dépôt: 25.05.2012
(51) Int. Cl.: B66F 11/04, B66F 17/00, B23K 9/18, B23K 37/00

(54) **Système de freinage pour installation avec plateforme pour opérateur embarqué mobile verticalement**
Bremssystem für eine vertikal beweglichen Plattform für einen Arbeiter
Braking system for installation in a vertically movable platform for a workman

(30) Priorité: 06.06.2011 FR 1154873
(43) Date de publication de la demande: 12.12.2012
(73) Titulaire: AIR LIQUIDE WELDING FRANCE, 75007 Paris (FR)
(72) Inventeur: Gerbier, Stéphane, 79390 Aubigny (FR)
(74) Mandataire: Pittis, Olivier

(56) Documents cités:
- WO-A1-01/51404
- CA-A1- 2 547 286
- FR-A1- 2 487 803

## Description

L'invention concerne un système ou dispositif mécanique de freinage apte à et conçu pour réagir, en réponse à la détection par un système de sécurité de l'occurrence d'une survitesse ou vitesse excessive de descente du bras mobile d'une potence industrielle, telle une potence de soudage avec opérateur embarqué, en particulier une survitesse survenant en cas de chute brusque et subite vers le sol du bras de la potence, ainsi qu'une potence équipée d'un tel système de freinage.

Certaines structures métalliques de grandes dimensions, c'est-à-dire de plusieurs mètres, voire dizaines de mètres, ne peuvent être fabriquées en une seule partie et doivent donc être formées par assemblage de sous-parties de plus petites dimensions qui sont soudées entre elles.

Ainsi, les mâts d'éoliennes sont généralement formés par assemblage de plusieurs viroles soudées bout-à-bout, typiquement des viroles de 3 à 10 mètres de diamètres. Il en va de même de certains équipements de grandes dimensions, tels des réservoirs ou analogues, utilisées dans le domaine nucléaire ou naval.

Le soudage de ces sous-parties se fait généralement par mise en oeuvre d'un procédé de soudage à l'arc submergé en multi-passes, à savoir jusqu'à 15 à 20 passes, selon l'épaisseur à souder, et en configuration de joint étroit.

Afin d'éviter que le flux de soudage ne tombe par gravité, le soudage à l'arc submergé par exemple de deux viroles l'une avec l'autre se fait habituellement sur le dessus des viroles soumises à un mouvement rotatif de manière à pouvoir réaliser le dépôt de métal provenant du ou des fils fusibles, le long du joint de soudure.

Pour ce faire, on utilise classiquement une potence de soudage à opérateur embarqué. Une telle potence de soudage comprend un mât vertical qui supporte un bras-porteur mobile verticalement sur le mât par le biais d'un dispositif mobile intermédiaire coulissant le long du mât, encore appelé coulisseau mobile, sur lequel est fixé le bras-porteur. Un système motorisé permet d'assurer la montée verticale du bras le long du mât. Le bras-porteur porte à son extrémité un opérateur et des équipements pour opérer et contrôler le soudage proprement dit, notamment la ou les torches de soudage...

Ce type de potence est équipé d'un dispositif de freinage, couramment appelé « parachute » mécanique, servant, en cas de défaillance ou rupture d'un élément du système de levage, tel qu'une chaîne, un axe liant la chaine à un point de support ou un arbre de réducteur, d'éviter que le bras-porteur ne descende le long du mât avec une vitesse trop élevée ou vitesse « de chute » et ne subisse une accélération trop importante, lesquelles risqueraient d'engendrer des dégâts à l'installation et des blessures à l'opérateur, lors de l'arrivée brutale du bras-porteur en bas de mât.

Ce dispositif de freinage va, lorsqu'il est déclenché par un système de sécurité embarqué détectant non seulement toute survitesse éventuelle mais aussi optionnellement un déséquilibre du système de lavage et/ou un dépassement d'une position extrême basse du bras le long du mât vertical de la potence, venir coopérer avec le mât vertical de la potence pour bloquer le mouvement de descente du bras-porteur. Un tel dispositif de freinage est notamment décrit dans le document CA-A-2547286.

Or, un des inconvénients majeurs de ce type de dispositif est d'engendrer une décélération excessive du bras-porteur, typiquement de plusieurs « g », généralement suivie d'un blocage brusque du mouvement de descente du bras-porteur. Il s'ensuit un risque accru de traumatismes pour l'opérateur embarqué.

Au vu de cela, le problème qui se pose alors est de proposer un système ou dispositif de freinage amélioré, c'est-à-dire entièrement mécanique, de conception simple, efficace et de coût modique, pour potence à bras-porteur mobile le long d'un mât vertical, en particulier pour potence de soudage, permettant de réagir immédiatement à son activation mécanique par un système de sécurité en réponse à l'occurrence d'une survitesse de descente du bras-porteur, en particulier en cas de chute dudit bras-porteur consécutivement à la rupture ou défaillance d'une partie de l'installation, de manière à stopper aussi rapidement que possible le mouvement de chute du bras-porteur, notamment en évitant une décélération excessive du bras porteur et un arrêt brusque de son mouvement de descente, et à éviter ainsi que l'opérateur ne soit blessé ou d'autres éléments de l'installation détériorés par la chute du bras-porteur.

La solution de l'invention est alors un système de freinage pour potence à bras-porteur mobile le long d'un mât vertical, comprenant :
- un élément pivotant d'axe AA portant au moins un premier levier d'actionnement et un bras de libération, l'élément pivotant étant apte à et conçu pour pivoter autour de l'axe AA consécutivement à un actionnement du premier levier d'actionnement,
- un organe de blocage coopérant avec le bras de libération, et
- un organe élastique coopérant avec l'organe de blocage,
et dans lequel, lors d'un pivotement de l'élément pivotant autour de l'axe AA consécutivement à un actionnement du premier levier d'actionnement, le bras de libération se déplace entre au moins :
- une première position dans laquelle le bras de libération retient l'organe de blocage dans une position de repos, et
- une deuxième position dans laquelle le bras de libération libère l'organe de blocage, ledit organe de blocage étant alors poussé dans une position active par l'organe élastique,
**caractérisé en ce qu'**il comporte en outre au moins un amortisseur, l'organe de blocage étant porté par un élément de jonction d'axe BB venant se raccorder à au moins une pièce de soutien portant chacune un amortisseur.

Selon le cas, le système ou dispositif de l'invention peut comprendre l'une ou plusieurs des caractéristiques suivantes :
- le premier levier d'actionnement et le bras de libération sont fixés solidairement à l'élément pivotant de manière à pivoter en synchronisme avec l'élément pivotant autour de l'axe AA.
- l'élément pivotant est de forme oblongue, de préférence cylindrique, par exemple une barre cylindrique.
- le bras de libération comporte un évidement au sein duquel vient se loger une partie en saillie de l'organe de blocage pour maintenir l'organe de blocage dans la position de repos lorsque le bras de libération est dans la première position.
- l'organe de blocage pivote autour d'un axe BB parallèle à l'axe AA, lorsque ledit organe de blocage est repoussé par l'organe élastique.
- l'organe élastique vient appuyer sur la partie en saillie de l'organe de blocage.
- l'organe de blocage comporte en outre une portion active apte à et conçue pour venir coopérer avec une crémaillère.
- l'organe élastique comprend au moins un ressort.
- il comprend deux amortisseurs, de préférence l'organe de blocage est agencé entre les deux amortisseurs.
- il comprend deux pièces de soutien portant chacune au moins un amortisseur, de préférence la ou les pièces de soutien ont une structure en équerre.
- l'élément pivotant d'axe AA comprend un deuxième levier d'actionnement coopérant avec un élément-poussoir mobile au sein d'un logement.
- l'élément-poussoir mobile est apte à et conçu pour être déplacé en direction du deuxième levier d'actionnement, lorsqu'une came, agencée sur le mât vertical de la potence, vient exercer une force d'appui sur ledit élément-poussoir.
- l'élément pivotant d'axe AA comprend un troisième et un quatrième levier d'actionnement coopérant avec un palonnier d'équilibrage comprenant des pignons reliés par un axe de liaison parallèle à l'axe AA.
- les pignons sont reliés par une paire de chaînes de levage à un système motorisé. L'invention porte en outre sur une installation avec plateforme pour opérateur embarqué, mobile verticalement, **caractérisée en ce qu'**elle est équipée d'un système de freinage selon l'invention. En fait, sont concernées, les installations comprenant une plateforme, y compris une nacelle ou analogue, supportant un ou plusieurs opérateurs et qui sont conçues pour et aptes à être descendues ou remontées verticalement, par exemple un ascenseur ou une plateforme mobile le long d'un mât, ou tout système d'élévation de personne utilisant un système de guidage linéaire fixe auquel on peut rattacher une crémaillère, et concerné par les normes NF EN 1495, NF EN 280 et NF EN 14502-2 ; de telles installations peuvent être utilisées par exemple pour des opérations de nettoyage ou d'entretien des surfaces externes d'immeubles, notamment pour le nettoyage des surfaces vitrées ou encore la mise en peinture de revêtements externes ou internes, voire de plafonds.

Plus spécifiquement, l'invention porte sur une potence à bras-porteur mobile le long d'un mât vertical, en particulier une potence de soudage à opérateur embarqué, **caractérisée en ce qu'**elle est équipée d'un système de freinage selon l'invention.

En particulier, la potence comporte un dispositif mobile intermédiaire coulissant le long du mât portant le bras-porteur, et un système de sécurité coopérant avec le système de freinage pour venir actionner le système de freinage en cas de chute du bras-porteur, ledit système de freinage coopérant avec une crémaillère portée par le mât de la potence.

Par ailleurs, l'invention porte aussi sur un procédé de soudage, en particulier à l'arc submergé, dans lequel on utilise une potence selon l'invention, en particulier pour souder ensemble des viroles de 3 à 10 m de diamètre.

L'invention va être maintenant décrite plus en détail en références aux Figures annexées parmi lesquelles :
- la Figure 1 représente une potence de soudage à opérateur embarqué équipée d'un système de freinage selon la présente invention coopérant avec un système de sécurité,
- la Figure 2 est une vue grossie d'une partie de la potence de la Figure 1 faisant apparaître le système de freinage selon la présente invention coopérant avec le système de sécurité,
- les Figures 3 (vue de face) et 4 (vue de derrière) détaillent le système de freinage selon la présente invention,
- les Figures 5A à 5C illustrent le fonctionnement du système de freinage selon la présente invention, et
- la Figure 6 illustre des applications de soudage possibles d'une potence selon la Figure 1.

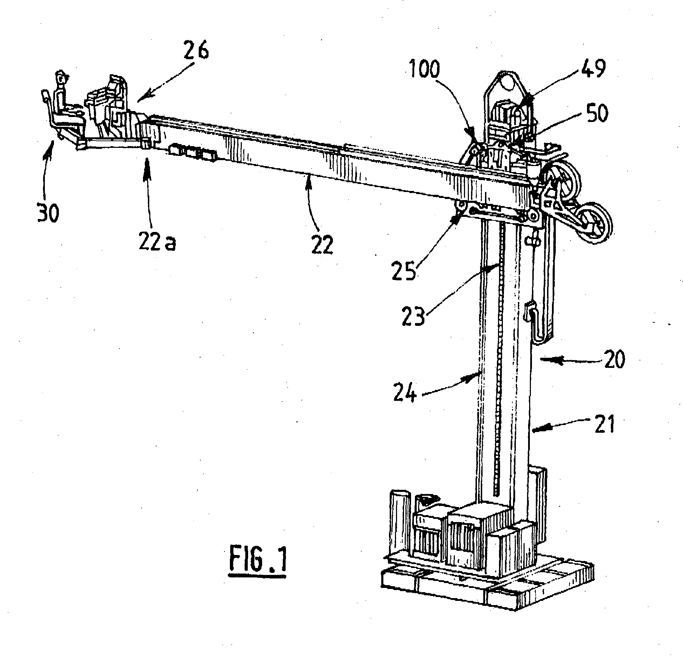

La Figure 1 schématise une potence 20 industrielle utilisable pour opérer un soudage à l'arc submergé de sous-parties ou sous-unités de structures métalliques de grandes dimensions, par exemple de viroles de 3 à 10 mètres de diamètre (mesuré au niveau du plan de joint), soudées les unes à la suite des autres, c'est-à-dire raboutées, pour constituer un mât d'éolienne, laquelle est équipée d'un système de sécurité (désigné par la référence générale 100) coopérant avec un système de freinage selon l'invention (désigné par la référence générale 50).

Cette potence 20 de soudage comprend un mât vertical 21 qui supporte un bras-porteur 22 mobile verticalement, c'est-à-dire de bas en haut, sur le mât 21 par le biais d'un dispositif mobile intermédiaire 25 coulissant le long du mât, encore appelé coulisseau mobile 25, sur lequel est fixé le bras-porteur 22.

Le bras-porteur 22 porte à son extrémité libre 22a, les différents équipements nécessaires pour réaliser et contrôler le soudage, à savoir notamment torche de soudage, un système d'amenée de flux et de fil de soudage, un système de suivi de joint, un système de vision...., ainsi qu'un opérateur 30 embarqué qui sert à positionner et à piloter les équipements soudage et à s'assurer du bon déroulement de l'opération de soudage, notamment au cours de l'exécution des différentes passes successives.

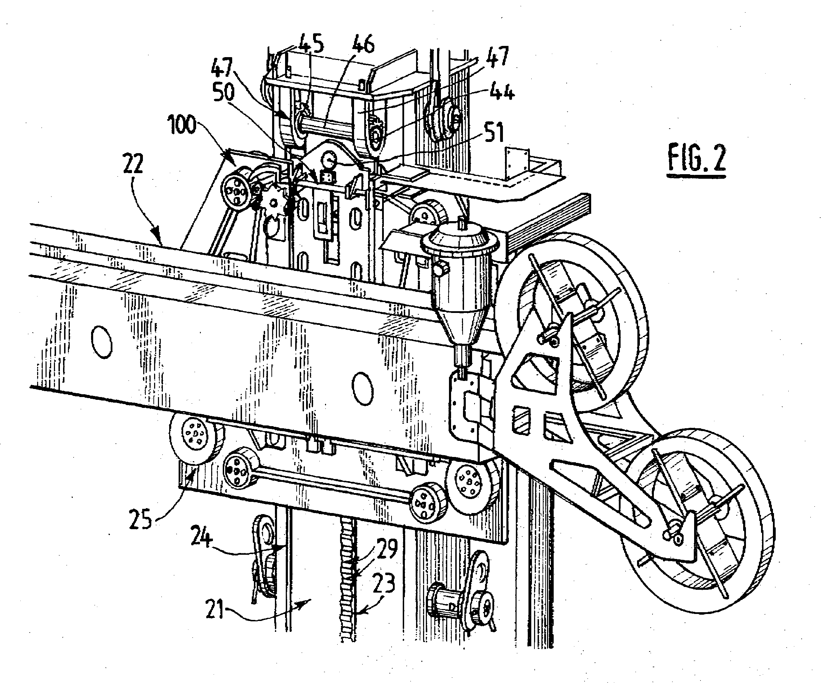

Le déplacement du bras-porteur 22 le long du mât 21 se fait de manière connue en soi grâce à un système motorisé 49, situé en haut de mât, comprenant un jeu de chaines 47 et de pignons 44, 45 entraînés par un motoréducteur, comme illustré en Figures 1 et 2.

Comme détaillé en Figure 2, le mât 21 comporte une première crémaillère 24 destinée à coopérer avec le système de sécurité 100 pour détecter une survitesse, en cas de chute du bras-porteur 22, ainsi qu'une deuxième crémaillère 23, couramment appelée rail d'arrêt, coopérant avec le dispositif de freinage 50 ou parachute mécanique de l'invention, lorsque celui-ci est actionné, c'est-à-dire déclenché, par le système de sécurité 100 en cas de chute brutale du bras-porteur 22.

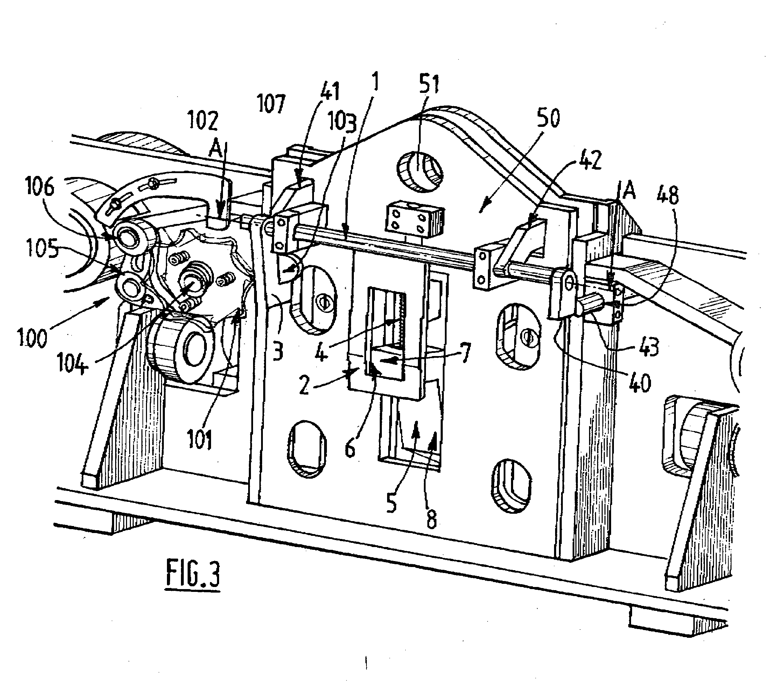

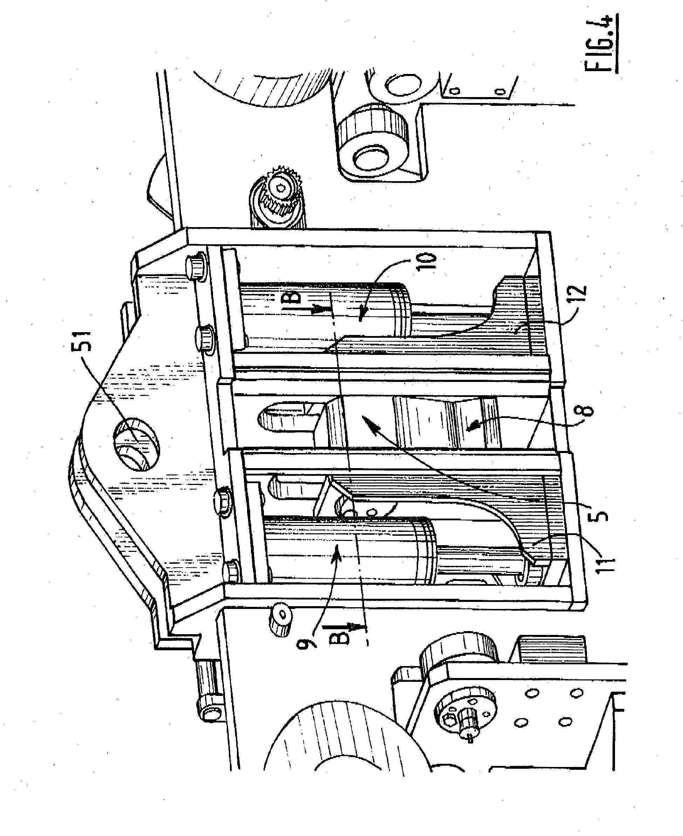

Plus précisément, comme illustré sur les Figures 3 et 4, le système de sécurité 100 embarqué sur la potence comporte un levier mobile 103 venant actionner, c'est-à-dire déclencher, le système de freinage 50 de l'invention, comme détaillé ci-après, consécutivement à une détection de survitesse par le système de sécurité 100 qui comprend non seulement un arbre 104 rotatif portant un pignon fixe coopérant avec la première crémaillère 23 (cf. Fig. 2) pour détecter les survitesses, une roue à rochet 101 et une came rotative 102, mais aussi ledit levier mobile 103 qui porte lui-même un bras pivotant 105 muni à l'une de ses extrémités d'un cliquet coopérant avec les encoches de la roue à rochet 101 et à l'autre de ses extrémités un galet 106, et par ailleurs une contre-came 107 fixe destinée à stopper le basculement du bras pivotant 105 en arrêtant la course angulaire du galet 106 qui se produit en réponse à la détection d'une survitesse et engendrant en outre la rotation du levier 103 et l'actionnement du système de freinage 50 de l'invention.

Le système de freinage 50 de l'invention comprend quant à lui un élément pivotant 1 d'axe AA, par exemple une barre de forme générale cylindrique, sur lequel sont fixés au moins un premier levier d'actionnement 3 et un bras de libération 2.

Optionnellement, l'élément pivotant 1 peut porter plusieurs autres leviers 40, 41 et 42, comme expliqué ci-après.

L'élément pivotant 1 est mobile en pivotement, c'est-à-dire en rotation, autour de son axe AA. Il pivote consécutivement à un actionnement au moins du premier levier d'actionnement 3 par le levier mobile 103 du système de sécurité 100. Dit autrement, l'actionnement du premier levier d'actionnement 3 du système de sécurité 100 va entraîner une rotation de l'élément pivotant 1 et du bras de libération 2.

Préférentiellement, l'élément pivotant 1 peut également entrer en rotation autour de son axe AA suite à un actionnement de l'un ou l'autre des autres leviers optionnels 40, 41 et 42, comme détaillé ci-après, de sorte de pouvoir optionnellement détecter aussi un déséquilibre du système de levage ou un dépassement d'une position extrême en bas de potence 20.

Plus précisément, lors de la détection d'une chute du bras-porteur 22 par ledit système de sécurité 100, le levier mobile 103 du système de sécurité 100 vient appuyer mécaniquement sur le premier levier d'actionnement 3, ce qui provoque un basculement, c'est-à-dire un pivotement de celui-ci autour de l'axe AA, et engendre donc également un pivotement de l'élément pivotant 1 ainsi que du bras de libération 2 étant donné que le levier d'actionnement 3 et le bras de libération 2 sont fixés solidairement à l'élément pivotant 1, par exemple par vissage ou soudage ou fabriqués d'une seule pièce, de manière à pouvoir pivoter en synchronisme avec l'élément pivotant 1.

Par ailleurs, le système de freinage 50 de l'invention comprend également un organe de blocage 5, tel un coin bloquant, coopérant avec le bras de libération 2 et destiné à venir interagir avec le rail d'arrêt 23, et par ailleurs un organe élastique 4, tel un ressort ou analogue, coopérant avec l'organe de blocage 5 pour le repousser en direction du rail d'arrêt 23.

Plus précisément, avant déclenchement du système de freinage, le bras de libération 2 se trouve dans une première position angulaire (par rapport à l'axe AA) dans laquelle il retient l'organe de blocage 5 dans une position dite « de repos », dans laquelle ledit organe de blocage 5 n'interagit pas avec le rail d'arrêt 23, ce qui permet une descente normale du bras-porteur 22 le long du mât 21 puisque aucun blocage de descente n'intervient.

Par contre, lors d'un pivotement de l'élément pivotant 1 autour de l'axe AA suite à l'actionnement du premier levier d'actionnement 3 par le levier pivotant 103 du système de sécurité 100, en cas de chute du bras-porteur 22, le bras de libération 2 pivote angulairement (par rapport à l'axe AA) jusqu'à atteindre une deuxième position angulaire qui est angulairement décalée par rapport à la première position angulaire, dans laquelle il libère l'organe de blocage 5, lequel est alors repoussé par l'organe élastique 4 qui exerce une force de répulsion sur l'organe de blocage 5.

Dit autrement, le pivotement du bras de libération 2 engendre une libération de l'organe de blocage 5 et un mouvement de celui-ci depuis sa position dite « de repos » vers une position dite « active » dans laquelle il va aller s'insérer, via une portion active 8, dans l'un des logements 29 portés par le rail d'arrêt 23 et ainsi engendrer un blocage du mouvement de chute du bras-porteur 22, ladite portion active 8 venant s'engager dans l'un des logements 29 ou encoches du rail d'arrêt ou crémaillère 23.

De préférence, le déplacement de l'organe de blocage 5 entre sa position de repos et sa position active se fait pas pivotement dudit organe de blocage 5 autour d'un second axe BB parallèle à l'axe BB mais décalé de celui-ci.

Le maintien de l'organe de blocage 5 par le bras de libération 2 se fait par le biais de moyens de couplage pouvant revêtir différentes formes.

Ainsi, dans le mode de réalisation représenté sur les Figures, les moyens de couplage sont constitués d'un évidement 6 et d'une partie en saille 7. Plus précisément, le bras de libération 2 comporte un évidement 6, c'est-à-dire un logement, au sein duquel vient se loger une partie en saillie 7 de l'organe de blocage 5 de manière à permettre un blocage de l'organe de blocage 5 par le bras de libération 2 lorsque le bras de libération 2 est dans la première position et l'organe de blocage 5 dans sa position de repos.

Comme déjà mentionné, le système peut comprendre également des leviers 40, 41, 42 supplémentaires servant à assurer également une réaction de freinage en cas de détection automatique d'un déséquilibre du système de levage ou d'un dépassement d'une position extrême en bas de potence 20,

Plus précisément, comme illustré sur la Figure 3, l'élément pivotant 1 d'axe AA porte par ailleurs un deuxième levier d'actionnement 40, ainsi qu'une paire de leviers comprenant un troisième et un quatrième levier d'actionnement 41, 42.

Le deuxième levier d'actionnement 40 coopère avec un élément-poussoir mobile 43, de préférence mobile en translation dans un logement 48 aménagé au sein du coulisseau 25, coopérant avec une came (non montrée) agencés sur le fût ou mât vertical 21 de la potence, en position basse, c'est-à-dire à proximité du sol, par exemple à une hauteur de 1 mètre du sol, de manière à former une butée basse permettant de détecter tout dépassement d'une position extrême en bas de potence 20.

Dans ce cas, lorsque le bras 22 descend le long du mât 21 de la potence 20 jusqu'à atteindre une position limite basse, l'élément-poussoir 43 mobile est alors repoussé par la came située au niveau de la position limite basse, et pivote alors autour de l'axe AA en entraînant le bras de libération 2 duquel se désengage alors l'organe de blocage 5, comme expliqué précédemment ce qui lui permet de venir bloquer le mouvement de descente.

Le poussoir 43 mobile est apte à et conçu pour être déplacé en direction du deuxième levier d'actionnement 40, lorsque la came, agencée en partie basse du mât vertical 21 de la potence, vient exercer une force d'appui sur ledit élément-poussoir 43 qui tend à l'éloigner de ladite came et donc à le rapprocher du deuxième levier 40.

Par ailleurs, les troisième et quatrième leviers d'actionnement 41, 42 forment une paire de leviers coopérant avec un palonnier d'équilibrage servant à détecter un déséquilibre éventuel du système de levage.

Plus précisément, les troisième et quatrième leviers d'actionnement 41, 42 qui également solidaire de l'élément pivotant 1 d'axe AA peuvent coopérer avec l'un ou l'autre des pignons 44, 45 qui sont reliés par l'axe de liaison 46 (l'axe 46 est parallèle à l'axe AA).

En fait, les pignons 44, 45 sont reliés par une paire de chaînes de levage 47 (une chaîne par pignon) à un ou plusieurs pignons situés au niveau du système motorisé 49 servant à faire monter ou descendre le bras, par exemple un motoréducteur agencé en haut du mât 21, comme illustré en Figures 1 et 2.

En cas de rupture d'une des chaînes 47, l'un des pignons 44, 45 reliés par l'axe de liaison 46 de manière à former un palonnier d'équilibrage, dont le côté droit ou le côté gauche bascule alors vers le bas, en direction du troisième 41 ou du quatrième levier d'actionnement 42 qui lui fait face, jusqu'à venir au contact et appuyer sur ledit troisième ou quatrième levier d'actionnement 41, 42. L'autre pignon 44, 45 situé à l'autre extrémité de l'axe de liaison 46 du palonnier d'équilibrage reste lui maintenu par l'autre chaîne 47 qui ne s'est pas rompue.

Lorsque l'un des pignons 44, 45 du palonnier d'équilibrage appuie sur l'un des troisième ou quatrième levier d'actionnement 41, 42, ce troisième ou quatrième levier d'actionnement 41, 42 va alors pivoter autour de l'axe AA en entraînant avec lui l'élément pivotant 1 et donc aussi le bras de libération 2 duquel se désengage alors l'organe de blocage 5, comme expliqué précédemment, ce qui lui permet, là encore, de venir bloquer le mouvement de descente.

A noter que le logement 51 permet de recevoir un axe d'articulation servant à articuler le plafonnier d'équilibrage.

La présence des deuxième, troisième et quatrième leviers 40, 41, 42 est préférable, bien qu'optionnelle, car elle permet d'accroître la sécurité du système global.

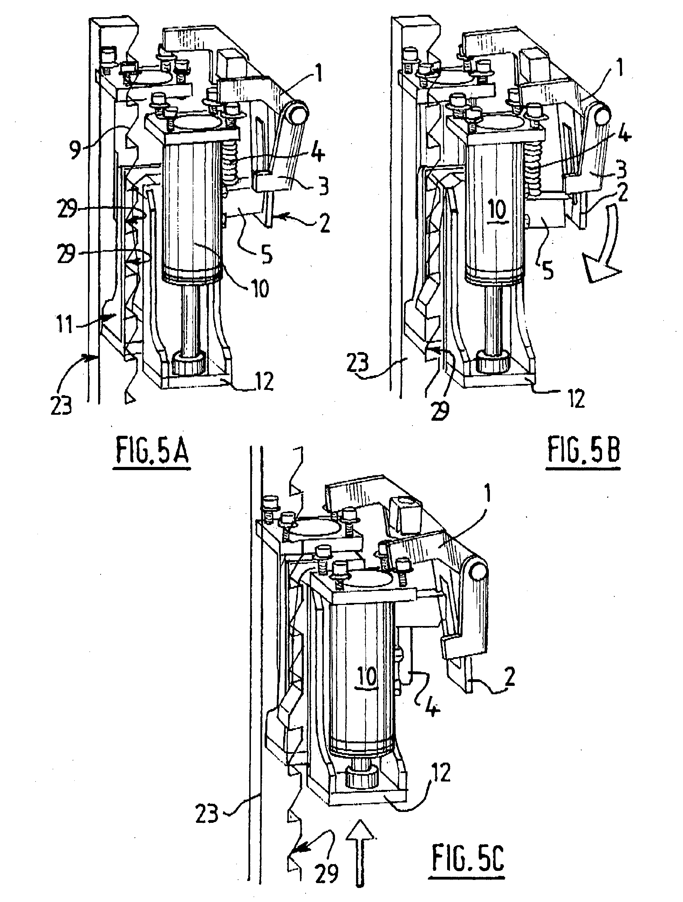

Comme illustré en Figure 4 et sur les Figures 5A à 5C, le système de l'invention comprend en outre un ou plusieurs amortisseurs 9, 10, typiquement deux amortisseurs, prenant en « sandwich » l'organe de blocage 5.

De préférence, les amortisseurs 9, 10 sont de type hydraulique ou équivalent.

En fait, l'organe de blocage 5 est porté par un élément de jonction d'axe BB, parallèle à l'axe AA, venant se raccorder à une ou plusieurs pièces de soutien, typiquement deux pièces de soutien 11,12 en forme d'équerre, portant chacune un amortisseur 9, 10.

Comme illustré en Figure 4, une fois le coin 8 engagé dans la crémaillère 23 (cf. Fig. 2), le dispositif mobile intermédiaire 25 ou coulisseau mobile coulissant le long du mât vertical 21 et portant le bras-porteur 22, n'est pas brusquement stoppé verticalement car il n'est pas rigidement lié verticalement au coin 8.

En fait, sa connexion avec le coin 8 se fait verticalement via les amortisseurs 9 et 10, eux-mêmes en appui sur les équerres 11 et 12, elles mêmes liées à l'axe B-B qui supporte le coin 8 et qui guide sa rotation, lorsqu'il est libéré. U

Une fois le coin 8 engagé et stoppé dans la crémaillère 23, le coulisseau mobile 25 bénéficie encore de la course verticale des amortisseurs 9, 10 pour être stoppé avec une décélération contrôlée apte à ne pas engendrer de dommage corporel à l'opérateur situé en bout de bras 22. La course verticale des amortisseurs 9, 10 est ajustée en fonction de la masse à décélérer et de la décélération souhaitée. De préférence, la course verticale des amortisseurs 9, 10 est inférieure à 100 mm.

De préférence, le dispositif mobile intermédiaire 25 ou coulisseau mobile est constitué d'une seule pièce mais peut évidemment être formé de plusieurs pièces assemblées les uns aux autres.

La Figure 5A représente le système de freinage en position d'attente de déclenchement. On voit que le levier de libération 2 retient l'organe de blocage 5 en position de repos.

La Figure 5B montre la libération de l'organe de blocage 5, c'est le coin, après actionnement du levier d'actionnement 3 et pivotement de l'élément pivotant 1 provoquant le désengagement du bras or organe de libération 2 par passage de celui-ci de sa première position à sa deuxième position, suite à la détection par un système de sécurité 100 agissant sur le levier d'actionnement 3 d'une chute du bras-porteur 22. Une fois libéré, l'organe de blocage 5, qui est repoussé par le ressort 4, vient s'engager dans l'une des encoches ou logements 29 du rail de freinage ou crémaillère 23 de sorte de bloquer la chute du bras-porteur 22.

Enfin, comme illustré en Figure 5C, sous l'action de la masse à décélérer, en particulier du bras-porteur 22 et des éléments qu'il porte (opérateur, matériels...), les amortisseurs 9, 10 qui sont en appui sur les éléments de soutien en équerre 11, 12, se compriment de manière à amortir la chute et éviter que l'opérateur ne soit soumis à une décélération de plusieurs « g » suivie d'un arrêt trop brusque. Avantageusement, les amortisseurs 9, 10 sont dimensionnées de manière à ce que la décélération de la masse à décélérer soit de 1 « g » au plus, c'est-à-dire environ 9.8 m/s² au plus.

Après déclenchement, le système de freinage 50 de l'invention doit être réarmé de façon manuelle.

Le système de freinage 50 de l'invention peut équiper différents types d'installation avec plateforme embarquée mobile verticalement.

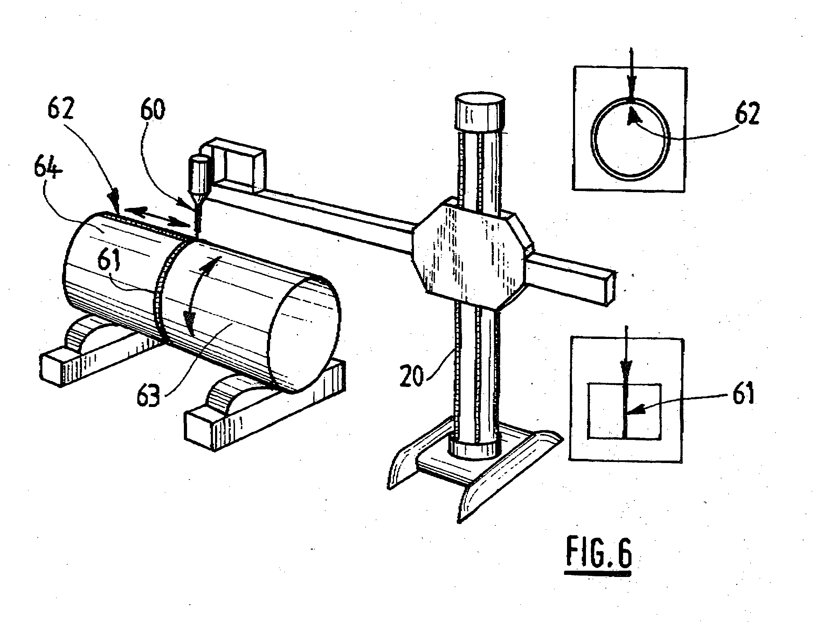

A titre d'exemple, comme illustré sur la Figure 6, une potence 20 équipée d'un système de sécurité selon l'invention peut être utilisée pour souder 60 des structures tridimensionnelles de grandes dimensions, c'est-à-dire de plusieurs mètres de diamètres, que la soudure soit circulaire 61, par exemple pour assembler deux viroles circulaires ou tronconiques 63, 64 l'une à l'autre, ou linéaire 62, par exemple pour réaliser la soudure de fermeture d'une virole. La potence 20 peut être posée ou fixée sur le sol ou, le cas échéant, mobile sur des rails, des roues ou analogues.

## Revendications

1. Système de freinage (50) comprenant :
- un élément pivotant (1) d'axe AA portant au moins un premier levier d'actionnement (3) et un bras de libération (2), l'élément pivotant (1) étant apte à et conçu pour pivoter autour de l'axe AA consécutivement à un actionnement du premier levier d'actionnement (3),
- un organe de blocage (5) coopérant avec le bras de libération (2), et
- un organe élastique (4) coopérant avec l'organe de blocage (5),
et dans lequel, lors d'un pivotement de l'élément pivotant (1) autour de l'axe AA consécutivement à un actionnement du premier levier d'actionnement (3), le bras de libération (2) se déplace entre au moins :
. une première position dans laquelle le bras de libération (2) retient l'organe de blocage (5) dans une position de repos, et
. une deuxième position dans laquelle le bras de libération (2) libère l'organe de blocage (5), ledit organe de blocage étant alors poussé dans une position active par l'organe élastique (4),
**caractérisé en ce qu'**il comporte en outre au moins un amortisseur (9, 10), l'organe de blocage (5) étant porté par un élément de jonction d'axe BB venant se raccorder à au moins une pièce de soutien (11, 12) portant chacune un amortisseur (9, 10).

2. Système selon la revendication 1, **caractérisé en ce que** le premier levier d'actionnement (3) et le bras de libération (2) sont fixés solidairement à l'élément pivotant (1) de manière à pivoter en synchronisme avec l'élément pivotant (1) autour de l'axe AA.

3. Système selon l'une des revendications précédentes, **caractérisé en ce que** l'élément pivotant (1) est de forme oblongue, de préférence cylindrique.

4. Système selon l'une des revendications précédentes, **caractérisé en ce que** le bras de libération (2) comporte un évidement (6) au sein duquel vient se loger une partie en saillie (7) de l'organe de blocage (5) pour maintenir l'organe de blocage (5) dans la position de repos lorsque le bras de libération (2) est dans la première position.

5. Système selon l'une des revendications précédentes, **caractérisé en ce que** l'organe de blocage (5) pivote autour d'un axe BB parallèle à l'axe AA, lorsque ledit organe de blocage (5) est repoussé par l'organe élastique (4).

6. Système selon l'une des revendications précédentes, **caractérisé en ce que** l'organe élastique (4) vient appuyer sur la partie en saillie (7) de l'organe de blocage (5).

7. Système selon l'une des revendications précédentes, **caractérisé en ce que** l'organe de blocage (5) comporte en outre une portion active (8) apte à et conçue pour venir coopérer avec une crémaillère (23).

8. Système selon l'une des revendications précédentes, **caractérisé en ce que** l'organe élastique (4) comprend au moins un ressort.

9. Système selon l'une des revendications précédentes, **caractérisé en ce qu'**il comprend deux amortisseurs (9, 10), de préférence l'organe de blocage (5) est agencé entre les deux amortisseurs (9, 10).

10. Système selon l'une des revendications précédentes, **caractérisé en ce qu'**il comprend deux pièces de soutien (11,12) portant chacune au moins un amortisseur (9, 10), de préférence la ou les pièces de soutien (11,12) ont une structure en équerre.

11. Système selon l'une des revendications précédentes, **caractérisé en ce que** l'élément pivotant (1) d'axe AA comprend un deuxième levier d'actionnement (40) coopérant avec un élément-poussoir (43) mobile au sein d'un logement (48), de préférence l'élément-poussoir (43) mobile est apte à et conçu pour être déplacé en direction du deuxième levier d'actionnement (40), lorsqu'une came, agencée sur le mât vertical (21) de la potence, vient exercer une force d'appui sur ledit élément-poussoir (43).

12. Système selon l'une des revendications précédentes, **caractérisé en ce que** l'élément pivotant (1) d'axe AA comprend un troisième (41) et un quatrième (42) levier d'actionnement coopérant avec un palonnier d'équilibrage comprenant des pignons (44, 45) reliés par un axe de liaison (46) parallèle à l'axe AA, de préférence les pignons (44, 45) sont reliés par une paire de chaînes de levage (47) à un système motorisé (49).

13. Installation avec plateforme pour opérateur embarqué mobile verticalement, **caractérisée en ce qu'**elle est équipée d'un système de freinage (50) selon l'une des revendications précédentes.

14. Potence (20) à bras-porteur (22) mobile le long d'un mât vertical (21), en particulier une potence (20) de soudage à opérateur (30) embarqué, **caractérisée en ce qu'**elle est équipée d'un système de freinage (50) selon l'une des revendications 1 à 12, de préférence elle comporte en outre un dispositif mobile intermédiaire (25) coulissant le long du mât (21) portant le bras (22), et un système de sécurité (100) coopérant avec le système de freinage (50) pour venir actionner le système de freinage (50) en cas de chute du bras-porteur (2), ledit système de freinage (50) coopérant avec une crémaillère (24) portée par le mât (21) de la potence (20).

15. Procédé de soudage, en particulier à l'arc submergé, dans lequel on utilise une potence (20) selon la revendication 14, en particulier pour souder ensemble des viroles de 3 à 10 m de diamètre.

## Patentansprüche

1. Bremssystem (50), das Folgendes umfasst:
- ein Element (1), das um eine Achse AA schwenkt, die wenigstens einen ersten Betätigungshebel (3) und einen Freigabearm (2) umfasst, wobei das Schwenkelement (1) in der Lage und dafür ausgelegt ist, infolge einer Betätigung des ersten Betätigungshebels (3) um die Achse AA zu schwenken,
- ein Sperrorgan (5), das mit dem Freigabearm (2) zusammenwirkt, und
- ein elastisches Teil (4), das mit dem Sperrorgan (5) zusammenwirkt,
und wobei bei einem Schwenken des Schwenkelements (1) um die Achse AA infolge einer Betätigung des ersten Betätigungshebels (3) der Freigabearm (2) wenigstens zwischen den folgenden Positionen bewegt wird:
. einer ersten Position, in der der Freigabearm (2) das Sperrorgan (5) in einer Ruheposition hält, und
. einer zweiten Position, in der der Freigabearm (2) das Sperrorgan (5) freigibt, wobei das Sperrorgan dann durch das elastische Teil (4) in eine aktive Position geschoben wird,
**dadurch gekennzeichnet, dass** es ferner wenigstens einen Dämpfer (9, 10) umfasst, wobei das Sperrorgan (5) von einem Verbindungselement der Achse BB getragen wird, das sich an wenigstens ein Stützteil (11, 12) anschließt, das jeweils einen Dämpfer (9, 10) trägt.

2. System nach Anspruch 1, **dadurch gekennzeichnet, dass** der erste Betätigungshebel (3) und der Freigabearm (2) fest an dem Schwenkelement (1) befestigt sind, so dass sie synchron mit dem Schwenkelement (1) um die Achse AA schwenken können.

3. System nach einem der vorherigen Ansprüche, **dadurch gekennzeichnet, dass** das Schwenkelement (1) eine längliche, vorzugsweise zylindrische Form hat.

4. System nach einem der vorherigen Ansprüche, **dadurch gekennzeichnet, dass** der Freigabearm (2) eine Aussparung (6) aufweist, in deren Innerem ein auskragender Teil (7) des Sperrorgans (5) aufgenommen wird, um das Sperrorgan (5) in der Ruheposition zu halten, wenn der Freigabearm (2) in der ersten Position ist.

5. System nach einem der vorherigen Ansprüche, **dadurch gekennzeichnet, dass** das Sperrorgan (5) um eine Achse BB parallel zur Achse AA schwenkt, wenn das Sperrorgan (5) von dem elastischen Teil (4) zurückgedrückt wird.

6. System nach einem der vorherigen Ansprüche, **dadurch gekennzeichnet, dass** das elastische Teil (4) am auskragenden Teil (7) des Sperrorgans (5) zur Anlage kommt.

7. System nach einem der vorherigen Ansprüche, **dadurch gekennzeichnet, dass** das Sperrorgan (5) darüber hinaus einen aktiven Teil (8) umfasst, der in der Lage und dafür ausgelegt ist, mit einer Zahnstange (23) zusammenzuwirken.

8. System nach einem der vorherigen Ansprüche, **dadurch gekennzeichnet, dass** das elastische Teil (4) wenigstens eine Feder umfasst.

9. System nach einem der vorherigen Ansprüche, **dadurch gekennzeichnet, dass** es zwei Dämpfer (9, 10) umfasst, wobei das Sperrorgan (5) vorzugsweise zwischen den zwei Dämpfern (9, 10) angeordnet ist.

10. System nach einem der vorherigen Ansprüche, **dadurch gekennzeichnet, dass** es wenigstens zwei Stützteile (11, 12) umfasst, die jeweils wenigstens einen Dämpfer (9, 10) tragen, wobei vorzugsweise das oder die Stützteil(e) (11, 12) eckig konstruiert sind.

11. System nach einem der vorherigen Ansprüche, **dadurch gekennzeichnet, dass** das Element (1) zum Schwenken um die Achse AA einen zweiten Betätigungshebel (40) umfasst, der mit einem Schiebeelement (43) zusammenwirkt, das im Innern einer Aufnahme (48) beweglich ist, wobei das bewegliche Schiebeelement (43) vorzugsweise zu einer Bewegung in einer Richtung des zweiten Betätigungshebels (40) fähig und ausgelegt ist, wenn eine Nocke, angeordnet am vertikalen Mast (21) des Trägers, eine Stützkraft auf das Schiebeelement (43) ausübt.

12. System nach einem der vorherigen Ansprüche, **dadurch gekennzeichnet, dass** das Element (1) zum Schwenken um die Achse AA einen dritten (41) und einen vierten (42) Betätigungshebel umfasst, die mit einem Ausgleichssicherheitshebel zusammenwirken, der Zahnritzel (44, 45) umfasst, die durch eine Verbindungsachse (46) parallel zur Achse AA verbunden sind, wobei die Zahnritzel (44, 45) vorzugsweise durch ein Paar Lastketten (47) mit einem Motorsystem (49) verbunden sind.

13. Anlage mit einer vertikal beweglichen Plattform für einen an Bord befindlichen Bediener, **dadurch gekennzeichnet, dass** sie mit einem Bremssystem (50) nach einem der vorherigen Ansprüche ausgestattet ist.

14. Träger (20) mit einem Tragarm (22), der entlang einem vertikalen Mast (21) beweglich ist, insbesondere ein Schweißträger (20) mit einem an Bord befindlichen Bediener (30), **dadurch gekennzeichnet, dass** der Träger mit einem Bremssystem (50) nach einem der Ansprüche 1 bis 12 ausgestattet ist, wobei er vorzugsweise darüber hinaus eine bewegliche Zwischenvorrichtung (25) umfasst, die entlang dem den Arm (22) tragenden Mast (21) gleitet, und ein Sicherheitssystem (100), das mit dem Bremssystem (50) zusammenwirkt, um das Bremssystem (50) im Falle des Abrutschens des Tragarms (2) zu betätigen, wobei das Bremssystem (50) mit einer Zahnstange (24) zusammenwirkt, die vom Mast (21) des Trägers (20) getragen wird.

15. Schweißsystem, insbesondere mit Unterbogen, bei dem ein Träger (20) nach Anspruch 14 benutzt wird, insbesondere zum Zusammenschweißen von Zwingen mit einem Durchmesser von 3 bis 10 m.

## Claims

1. Braking system (50) comprising:
- a pivoting element (1) having an axis AA and carrying at least one first actuation lever (3) and a release arm (2), the pivoting element (1) being capable of and designed for pivoting about the axis AA following actuation of the first actuation lever (3),
- a locking member (5) which interacts with the release arm (2), and
- a resilient member (4) which interacts with the locking member (5),
and in which, when the pivoting element (1) pivots about the axis AA following actuation of the first actuation lever (3), the release arm (2) moves between at least:
a first position in which the release arm (2) holds the locking member (5) in a rest position, and
a second position in which the release arm (2) releases the locking member (5), said locking member then being pushed into an active position by the resilient member (4),
**characterised in that** said system further comprises a damper (9, 10), the locking member (5) being carried by a connecting element which has an axis BB and is joined to at least one support part (11, 12), each part carrying a damper (9, 10).

2. System according to claim 1, **characterised in that** the first actuation lever (3) and the release arm (2) are rigidly attached to the pivoting element (1) such as to pivot in synchronisation with the pivoting element (1) about the axis AA.

3. System according to either of the preceding claims, **characterised in that** the pivoting element (1) is oblong, preferably cylindrical.

4. System according to any of the preceding claims, **characterised in that** the release arm (2) comprises a recess (6), in which a projecting part (7) of the locking member (5) is received in order to hold the locking member (5) in the rest position when the release arm (2) is in the first position.

5. System according to any of the preceding claims, **characterised in that** the locking member (5) pivots about an axis BB, which is parallel to the axis AA, when said locking member (5) is pushed back by the resilient member (4).

6. System according to any of the preceding claims, **characterised in that** the resilient member (4) bears on the projecting part (7) of the locking member (5).

7. System according to any of the preceding claims, **characterised in that** the locking member (5) further comprises an active portion (8) which is capable of and designed for interacting with a rack (23).

8. System according to any of the preceding claims, **characterised in that** the resilient member (4) comprises at least one spring.

9. System according to any of the preceding claims, **characterised in that** it comprises two dampers (9, 10), the locking member (5) is preferably arranged between the two dampers (9, 10).

10. System according to any of the preceding claims, **characterised in that** it comprises two support parts (11, 12), each carrying at least one damper (9, 10), the support part(s) (11, 12) preferably has/have a square structure.

11. System according to any of the preceding claims, **characterised in that** the pivoting element (1) having the axis AA comprises a second actuation lever (40) which interacts with a movable pusher element (43) in a slot (48), preferably the movable pusher element (43) is capable of and designed for being moved towards the second actuation lever (40) when a cam, arranged on the vertical mast (21) of the jib crane, exerts a bearing force on said pusher element (43).

12. System according to any of the preceding claims, **characterised in that** the pivoting element (1) having the axis AA comprises a third actuation lever (41) and a fourth actuation lever (42) which interact with a balancing spreader beam comprising pinions (44, 45) which are interconnected by a connecting shaft (46) which is parallel to the axis AA, the pinions (44, 45) are preferably connected to a motorised system (49) by a pair of lifting chains (47).

13. Installation comprising a vertically movable operator's platform, **characterised in that** it is equipped with a braking system (50) according to any of the preceding claims.

14. Jib crane (20) having a carrying arm (22) which is movable along a vertical mast (21), in particular a welding jib crane (20) having an on-board operator (30), **characterised in that** it is equipped with a braking system (50) according to any of claims 1 to 12, said jib crane preferably further comprises an intermediate movable device (25) which slides along the mast (21) carrying the arm (22), and a safety system (100) which interacts with the braking system (50) in order to actuate the braking system (50) if the carrying arm (2) falls downwards, said braking system (50) interacting with a rack (24) carried by the mast (21) of the jib crane (20).

15. Welding method, in particular submerged arc welding, wherein a jib crane (20) according to claim 14 is used, in particular to weld shells having diameters of from 3 to 10 m.
